# EUROPEAN PATENT SPECIFICATION

(11) **EP 2 015 521 B1**
(45) Date of publication and mention of the grant of the patent: **26.01.2011**
(21) Application number: 07013474.7
(22) Date of filing: 10.07.2007
(51) Int. Cl.: H04L 12/56

(54) **NTU queuing system**
NTU-Warteschlangensystem
Système de file d'attente NTU

(43) Date of publication of application: 14.01.2009
(73) Proprietor: ADVA AG Optical Networking, 98617 Meiningen (DE)
(72) Inventor: Woodman, Douglas, York YO30 6LH (GB)
(74) Representative: Eder, Christian

(56) References cited:
- US-A1- 2006 187 963
- US-B1- 6 310 892

## Description

### Technical Field

The present invention relates to a method and a queuing system for storing frames or other packets of data in queues in a bulk storage device (for example a bank of one or more SDRAMs) that can only be accessed efficiently in large fixed size chunks.

Storing frames or other packets of data of varying sizes in a queue in a bulk storage device, e.g. synchronous dynamic RAM (SDRAM), is difficult because SDRAM like most bulk storage devices can only be accessed efficiently in quite large fixed-size chunks. Further, frames may be arriving interleaved from different flows at one time destined for the one queue.

In a network termination equipment (NTE), for example, the SDRAM is used inefficiently and it can waste up to half the available bandwidth.

A method for storing frames or packets of data in queues in a bulk storage device is described in US 2006/0187963 A1. This method comprises the steps of: splitting up at least a portion of the bulk storage device into a number of buffers each of one or more chunks and queuing the frames or other packets of data which arrive from an input pipe as a series of segments, wherein a frame or other packet of data may be split into one or more segments.

It is an object of the present invention to provide a method and a queuing system for storing frames or other packets of data in queues in a bulk storage device, which makes more efficient use of a bulk storage device, particularly an external SDRAM, in a queuing system, so that the bandwidth is used efficiently. It is a further object of the invention to provide a method and a queuing system for storing frames or other packets of data in queues in a bulk storage device, which keeps the overhead in SDRAM to a minimum and is relatively simple to implement.

The invention achieves these objects with the combinations of features according to claims 1 and 10, respectively.

According to the invention a format is found that packs frames into fixed-size buffers in a bulk storage device, e.g. SDRAM, but that allows frames or other packets of data to be added to the queue only when complete.

In this queuing method the bulk storage device, or a portion thereof used for queuing, is split up into a number of buffers each of one or more chunks.

Frames arrive for queuing from an input pipe as a series of segments. A frame may be split into one or more segments, but if it is split into multiple segments then each segment except the last will fill a buffer when it has a link label attached to it. The link label is described below and serves to link segments into queues within the bulk storage.

The size of the last segment is such when a link label is attached, it will fit within one buffer but need not fill it. A key feature of this queuing method is to pack these final segments into buffers so that the bulk storage is used efficiently, and further that if the bandwidth available for accessing the bulk storage is limited, then this bandwidth is used efficiently.

On the input pipe, frames from a number of flows may be interleaved at the segment level. This means that the pipe comprises a series of complete segments. The segments for one frame arrive in order, but there may be intervening segments from other flows. One might, for example, have a number of flows coming into a bridge or router in a single pipe with each port associated with one flow.

The defining characteristic of a flow is that only one frame will be in progress on a flow at any one time. A key property of this queuing method is that any flow on the input pipe can write to any queue, in other words a queue is not dedicated to a particular input flow.

When a multi-segment frame is received, all the segments except the last are stored in a linked list. One linked list is required per flow. The linking is achieved using the link field in the link label that is attached to each segment by the queuing mechanism. The segment is then stored in the bulk storage device where it fills one buffer.

When the last segment of a frame is received, the frame is added to the selected queue. The segment has a link label attached and is then stored at the tail end of the queue. Each queue is built from a linked list of buffers in the bulk storage device. The final segments of frames in this queue are then packed into the buffers. A final segment may fit into one buffer or may be split between two consecutive buffers.

The terminology side chain is used for the linked list of buffers containing non-final segments of a frame. The terminology main chain is used for the linked list of buffers that holds the packed final segments of all the frames in one queue.

Each buffer in the main chain (except possibly the last) has at least one link label. The link field in each link label in a main-chain buffer identifies the next buffer in the chain. When packing segments into main-chain buffers, some limited padding is added ensuring that link labels do not cross buffer boundaries. Aligning the segments in the main chain is not strictly necessary and has a cost in efficiency, but simplifies the implementation.

The queuing system or module according to a preferred embodiment of the invention provides multiple queues in SDRAM. It supports multiple input flows and allows any input flow to write to any queue. The input is a segmented data stream. The output is a time division multiplexed (TDM) data stream again supporting multiple flows. Each queue will drive a fixed output flow or a fixed set of output flows. Sending to multiple flows is designed to support protection modes where frames are sent out on both network ports. The frame will, in general, be written once to SDRAM and read twice.

This module is specified, for example, for use in the 10/100/1000 Mbit network termination unit (NTU).

In a preferred embodiment of the invention the queue format is combined with sharing of a local storage, particularly the internal BlockRAM, by the two directions and the bypassing of the SDRAM when the queue is small.

Further embodiments of the invention are apparent from the dependent claims. In the following the invention will be described with reference to the drawings, where
- Fig. 1: shows a schematic representation of the frame format in the bulk storage device according to the invention;
- Fig. 2: shows a schematic representation of the queuing system according to the invention;
- Fig. 3: shows a schematic representation of the queuing functionality;
- Fig. 4: shows a diagram illustrating the segmented data format;
- Fig.: 5 shows a detailed representation of the queue format in SDRAM
- Fig. 6: shows the free buffer list format;
- Fig. 7: shows an overview diagram of the queuing system;
- Fig. 8: shows a diagram illustrating the basic block usage;
- Fig. 9: shows a diagram illustrating the shared block ownership and
- Fig.10: shows a diagram illustrating the buffer handling.

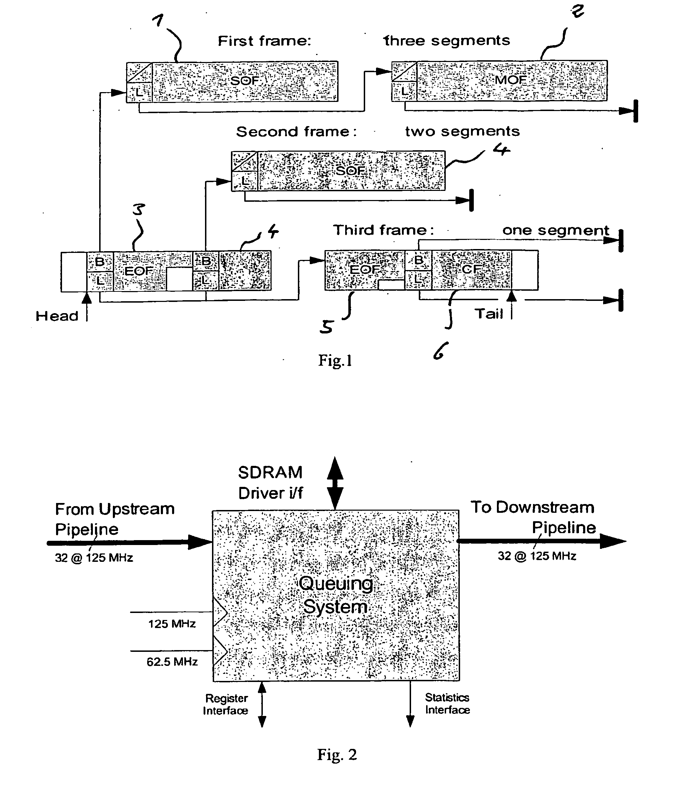

In the schematic block diagram according to Fig. 1, for purposes of clarity, only one queue is shown, which has three frames in it. Of course in a complete system there would be many such queues.

### The following abbreviations are used:

SOF is Start Of Frame, and is the first segment of a multi-segment frame.
MOF is Middle Of Frame, and is a middle segment of a frame of three or more segments.
EOF is End Of Frame, and is the final segment of a multi-segment frame.
CF is Complete Frame, and is a whole frame fitting in one segment.
B is the Base field of the link label used to attach a side chain to an EOF segment.
L is the Link field of the link label used to link together a single chain.

The link label also has additional fields not shown in this diagram according to Fig. 1, such as a field for the length of an EOF or CF segment, a field for a counter to tell the length of the side chains etc.

The first frame is shown in Fig. 1 (on top and at the bottom left side) and has a side chain of two segments. The first one 1 is a start of frame segment (SOF) and the second one 2 is a middle of frame segment (MOF). The EOF segment 3 is in the main chain. The EOF segment has had padding added to ensure that the next link label is aligned correctly.

The second frame in the middle of Fog. 1 has one start of frame segment 4 in the main chain and one end of frame segment 5 in the main chain. Again padding has been added to align the start of the next frame.

The third frame in Fig. 1 (bottom right side) comprises just a complete frame segment 6 in the main chain and has no side chain. It is shown with no padding, but padding would be added if required.

The head and tail pointers to each queue can be implemented in any way that the controlling engine wishes. It is not envisaged that they are stored in the bulk storage device but rather in some local storage.

The final link in each chain is not null but points to a pre-allocated next buffer. Before writing to one buffer, the controlling engine will always pre-allocate the next buffer. This leads to wasting one buffer per flow for a pre-allocated side-chain buffer, and one buffer per queue for a pre-allocated main-chain buffer. The purpose is that as a segment is received and a buffer is filled then the buffer can be written out to the bulk storage device immediately and it is not necessary to hold so much data locally.

When a final segment is received, it may fill a buffer, in which case that buffer may be written out immediately. Otherwise, one will be left with a partially filled buffer at the tail of the queue, this must be stored locally until such time as it is filled. This leads to a storage requirement of at least two buffers per queue in the controlling engine. One buffer is for a partially filled buffer at the tail waiting to be written to the bulk storage and one for a partially read buffer at the head waiting for the next frame to be sent on the output pipe.

As the final link in a chain is not null, the end of a chain must be determined by another mechanism. The end of the main chain is determined by the tail pointer. The end of the side chain is determined by having a side-chain length counter in the link label of the final segment.

When a queue starts up or is empty, it will have just one buffer in use and a second one pre-allocated. The head and tail pointers will both point to the same place and so the buffer is empty. When the first frame is added, it may not fill the buffer and would then not be written out to the bulk storage device. Nevertheless the tail pointer will be updated and so the queue is non-empty and the frame may be output. The head pointer will be advanced, and the frame can be output without any accesses, read or write, made to the bulk storage device.

It is therefore possible that the start and end of the main chain are never read or written to the bulk storage device. Instead, the information is exchanged using local storage in the controlling engine.

The amount of local storage needed is likely to depend strongly on the delay requirements of the system. If you just have the two buffers as described above, then there is little pre-fetching of data. All data in the side chains always has to be read from the bulk storage and this is only started once that frame has been selected as the next frame for transmission.

The buffer size may exceed the chunk size, which defines the size of reads and writes to the bulk storage. If this happens, then one may write out filled chunks within a partially filled buffer or read in completed chunks from an incomplete buffer. This will save local storage, but will increase the complexity of the controlling engine. As a minimum, now only two chunks of local storage per queue are needed rather than two buffers.

According to an embodiment of the invention, the device is being used in a Gigabit Ethernet MAC Relay, where bulk storage is provided by DDR SDRAMs as a low cost bulk memory device outside a field programmable gate array (FPGA). Multiple queues support multiple services as well as interfacing to management and test entities.

An FPGA provides the controlling engine with local buffers provided by dual-port SRAM blocks. One port interfaces to the external SDRAM and the other to the input and output pipes.

With two 16-bit DDR SDRAMs entirely dedicated to a single free buffer pool, the chunk size is 128 bytes, that is 16 bytes to each of the four banks per device. The buffer size is made to be 256 bytes to keep the overhead down to around 4% worst case.

Where there are many queues it is worth keeping the internal buffers to 128 bytes and reading and writing individual chunks to SDRAM. Where the number of queues is smaller, the use of 256-byte internal buffers is acceptable. This embodiment uses 256-byte internal buffers.

The ability for multiple input ports to write to the same queue reduces the number of queues needed in the system, which in turn reduces the amount of buffering needed.

In the following, the functionality of the method according to the invention and the queuing system is described in detail with the aid of an example. Of course, the size of buffers in the SDRAM and BlockRAM, number of blocks, data rates, etc. are only quoted as examples and may also be replaced with other values.

As an example the queuing system or module has to allocate 256-byte buffers in SDRAM and also, independently, in its main BlockRAM memory in the FPGA. This is very confusing. It is particularly confusing to call both buffers, so instead buffers in SDRAM are called buffers and buffers in BlockRAM are called blocks. So the SDRAM has approximately 256k buffers, and the BlockRAM has some 64 blocks.

### Function List

The queuing system shown in Fig. 2 takes in frames from the upstream pipeline and queues them until they can be sent out on the downstream pipeline. The queues are large and so use external SDRAM for the bulk of their storage. The queuing system is configured by the processor using the register interface. The queuing system provides statistics to the statistics module.

The queuing system supports multiple flows on its input and output. Frames on one flow may interleave frames on another flow, but each flow can only have one frame in progress at a time.

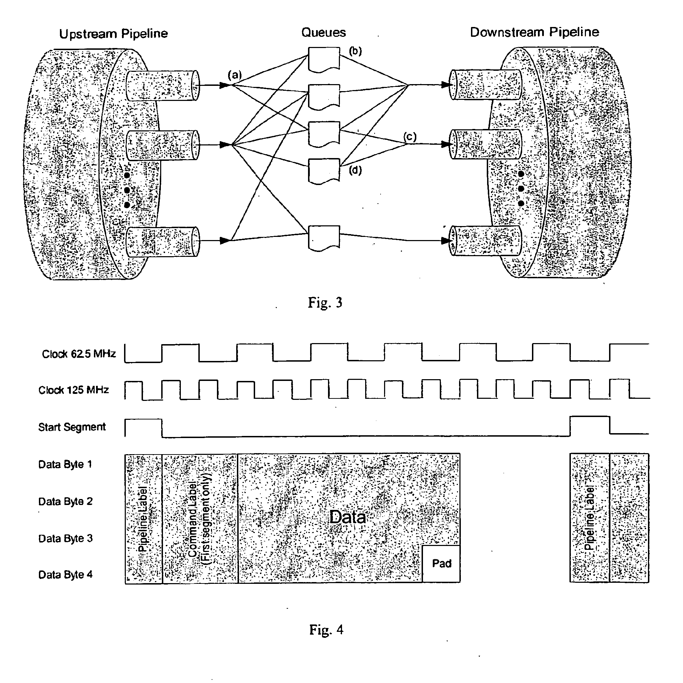

The diagram according to Fig. 3 shows the main characteristics of queues:
a) Any flow can write to any queue
b) Unicast queues send data to a particular flow
c) Flows can output frames from multiple queues
d) Multicast queues can be configured to send to multiple output flows

Multicast queues are only used for protection. They send data to both network ports. Data is written to the queue once and read twice. There is no support for varying the set of ports associated with a multicast queue.

Multiple queues to a port will be assigned to different priorities. Queues will be statically assigned. Separate queues will not be used for separate services at the same priority. This is an NTE type function.

On the input, the stream is divided into segments. Each segment is sent as a contiguous series of 32-bit words. A frame comprises one or more segments in a flow. The segments of a frame in one flow can be interleaved with the segments of other frames in other flows.

On the input pipeline, there is one flow per input port. There are three front-panel input ports and one backplane management input port. There is also a flow used for all processor generated frames and another for all upstream ECPA generated frames.

Note that frames from the upstream ECPA generator will set the source port in the frame to say the front-panel port that is being tested. But the ECPA bit will be set in the pipeline label and this means that the ECPA flow is to be used for this frame. An ECPA frame may be interleaved with a normal frame from the same port.

Likewise, there is just one flow from the processor. The processor has its own source port but it can set the source port to one of the front-panel ports if it wants to inject an ESA frame and have it treated like a frame received on a front-panel port.

### Split into Submodules

The following functional blocks combine to form the queuing system module:
1. The Put Task controls the queue format in SDRAM for writing (Putting) data to the queues.
2. The Put DMA writes frame data to blocks in the main BlockRAMs.
3. The Q-Core holds queue state shared between the Put and Get sides.
4. The main BlockRAM and its arbiter and the (64,56) error correction logic.
5. The Free Block Allocator does the allocation of free 256-byte blocks in the main BlockRAM, by keeping a free block list.
6. The Free Buffer Allocator does the allocation of free 256-byte buffers in the external SDRAM by keeping the free buffer list. The free buffer list is large and so has to be stored in SDRAM and sections of it paged in and out into the main BlockRAM.
7. The SDRAM Driver schedules SDRAM requests and drives the interface to the SDRAM transferring data into and out of BlockRAM.
8. The Get Task controls the reading of the linked lists to follow a queue and sequences the transmission of frames in each flow.
9. The Get DMA reads data from BlockRAM and outputs it using a staggered TDM output format.

### Metadata Label

### Segmented Format

The segmented format is used in the upstream pipeline and on the input to the queuing system. This comprises a sequence of segments. A strobe identifies the first word of a segment and a length field in the first word indicates how much data follows.

A similar segmented format is used throughout F-NTE, although the details are different. Here, the use is restricted to the upstream pipeline and the input to the queuing system. In particular, frames are segmented as required by the queuing system and no changes are allowed to the size of the segments before they enter the queuing system. The segmentation is lost on the output of the queuing system.

The first word of each segment is the pipeline label. This has the size field and serves to associate a segment with a port or other flow, and to allow segments to be grouped into frames.

The length field in the pipeline label gives the number of following bytes excluding the pipeline label, minus one. The smallest value for this field is zero where an end of frame segment contains only one data byte - presumably the last byte of the CRC. The largest value is 247 saying that the segment contains 248 data bytes. All segments except the final segment of a frame will be filled in NTU.

The first segment of a frame has an extra label called a command label carrying metadata. This counts as 8 bytes towards the segment data size leaving 240 frame data bytes maximum in the first segment. The 8 bytes of command label are included in the segment size.

The segments arriving at the queuing system will be aligned with respect to the 62.5 Mbit/s clock so that the pipeline label is received when the 62.5 MHz clock is low. Each subsequent 62.5 MHz clock cycle will deliver another eight bytes of data.

The segmented data format according to Fig. 4 shows two segments with a gap between the segments. The first segment shows the command label present in the first segment of a frame and some padding as might be seen in the last segment of a frame. The actual segment is too short to hold a complete frame so these two features are not really compatible.

There will always be a minimum of three clock cycles of idles at 125 MHz between segments as shown above. If the data is an odd number of words long, then the minimum gap between segments is four clock cycles to maintain correct alignment.

The pipeline label is read by the queuing system and converted into the linkage label for use in SDRAM. On output, it is converted into the control bits associated with the various flows.

The PL_SOP (PipeLine Label start of packet) bit is only set in the first segment of a packet. The PL_EOP (PipeLine Label end of packet) is set in the last segment of a packet. A single segment packet will have both bits set. The 8-bit PL_LEN (PipeLine Label length) field gives the length in bytes for data (and command label when present) minus one. It is easier to work with length minus one rather than with the actual length as the length in words (minus one) can be obtained by simply ignoring the lower order bits. The 5-bit PL_QID gives the number of the queue in which to store the frame. The PL_DROP field says that a frame is to be dropped if non-zero and the value gives the reason for dropping the frame. The frame can be dropped in any segment. The 3-bit PL_PORT gives the input port sourcing this frame in the upstream pipe.

If the ECPA module injects a frame, it does so on behalf of a port and so the PL_PORT field will indicate that port. But the ECPA generator generates one flow and so it sets the PL_ECPA bit to say that this frame is in the ECPA flow and segments with the PL_ECPA bit set should be assembled into frames using the ECPA flow and not the flow associated with the PL_PORT field.

Likewise, the processor has a single flow. All processor frames have the PL_PROC bit set to indicate that they belong to the processor flow. For management frames the PL_PORT will also indicate the processor flow, and this will stop the frame being processed as a received frame, but ESA frames should be treated as frames input on a user port and so have the PL_PORT field set to indicate a user port, but sets the PL_PROC bit to say that the flow is the processor's flow.

The queuing system uses these fields to identify the flow associated with each segment and thus to tie segments together into complete frames. It is otherwise not interested in the port number.

The command label is the first eight bytes of the first segment of each frame. It carries metadata transparently through the queuing system. The command label is not read or modified by this block but is treated as just another part of the data.

### Queue Format in SDRAM

SDRAM holds a number of queues and a number of free buffers. It also holds the free buffer list. At start up the free buffer list holds over 250,000 buffers, which is much more than can be kept track of in BlockRAM. Each queue comprises a linked list of 256-byte buffers (shown at the bottom the following diagram). The last segment of each frame is stored in these buffers. These are packed, with each frame rounded up to the next multiple of eight bytes. One frame thus uses from 16 to 256 bytes of this queue. The final segment may be contained in one buffer or split between two buffers. The packing of segments into requires that incomplete blocks can be shared between the Put and Get sides and data read out from a shared block without having to be transferred into SDRAM. The non-final segments always fill a complete buffer. These buffers are linked into a list with the base of the list given in the link label of the final segment.

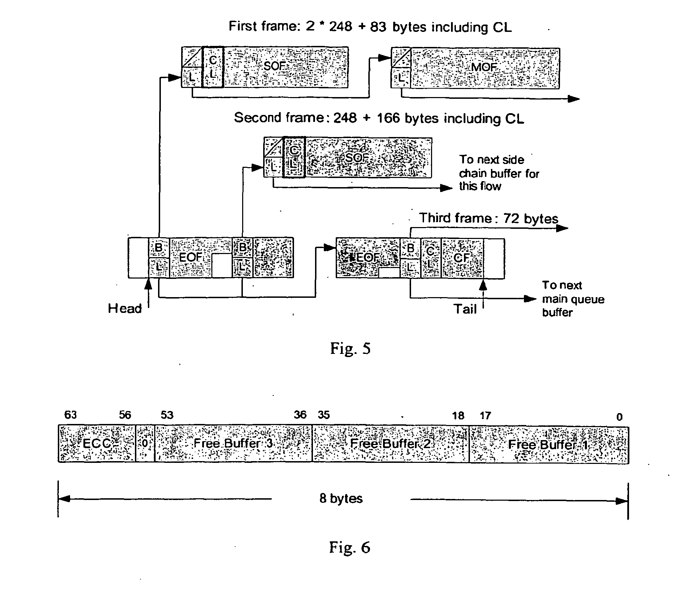

In the diagram according to Fig. 5 of a single queue the main queue is shown at the bottom. It has three frames shown. This is just one of twenty queues implemented in the NTU queuing system. The first frame has a side chain of two segments of 248 data bytes each. The first is a start of frame segment (SOF) and the second is a middle of frame segment (MOF). The SOF segment includes the command label (CL) as part of the 248 bytes. The link label at the start of each segment is not included in the 248 bytes and builds the total size up to 256 bytes for a side chain buffer. The end-of-frame fragment (EOF) has 43 bytes of data. To this, has been added 5 bytes of padding. The first frame does not start at the beginning of the first chunk of the main queue. Presumably, there was a previous frame, not shown, that ended at this point. The second frame has one 248-byte start of frame segment and then the final segment is 86 bytes, to which is added 2 bytes of padding. The third frame is 64 bytes and so uses just 80 bytes in the main queue. It has an 8-byte linkage label with an 8-byte command label added to the data. Note that a frame of 240 bytes or less, excluding the command label, has no chain.

A maximum length 9250-byte frame has a chain of 37 buffers. If the final segment, including padding, reaches to the last word of a buffer, then a new buffer is allocated at this time and the head or tail pointer will move on to the start of the new buffer. The link to the new buffer will be stored in the old frame. The word index within a buffer associated with a head or tail pointer is thus always in the range 0 to 31 (with units of 8 bytes).

### Free buffer list in SDRAM

As shown in Fig. 5 a list of free buffers is stored in the SDRAM. It holds the 18-bit buffer index packed three to an 8-byte word. There are then two unused bits which are zero and the top 8 bits have a single-error correcting and double-error detecting code. These are stored in the very lowest locations of the SDRAM and reserve the space equivalent of 2,703 buffers to store 2,703*96 buffers to fill the rest of the 64 Mbyte SDRAM. If single errors are always regarded by the processor as fatal, then the code is effectively triple error detecting as any three errors will be detected.

### Queue list

In the following, a provisional list of the queues and the queue readers will be provided. The NTU supports twenty queues and twenty-four queue readers. There are four queues to each of the access port and the two network ports, and two queues each to the backplane management and the processor. In addition, there are another four queues to the two network ports. These are like multicast queues. Frames in these queues are read twice by two independent queue readers, one for network port 1 and one for network port 2. For the multicast queues, it is sometimes necessary to access fields for the two readers simultaneously. To do this the 32 readers are split into two banks with the two readers for one queue in different banks. For unicast queues, the queues are allocated fairly arbitrarily between the two banks. From the list, it can be seen that the four queues 12 to 15 each have two readers. Readers 12 to 15 send frames to Network port 1, and readers 28-31 send frames to Network port 2. Each group of four queues run at four different priorities with priority three being serviced first. It was originally envisaged that the fourth queue is reserved for management and user traffic uses the other three priorities. The current favour is for two management queues and one user data queue. In this case, the fourth queue in each group is not used. The processor traffic can probably be usefully split into two priorities. There is less obvious need to split backplane traffic, but two queues have been provided in case they may turn out to be useful and to make the architecture more regular. There is clearly space to increase to five priority levels if required without adding new state memories.

**Table 1 Queues and their readers**

| Row | Bank 1 | | | | Bank 2 | | | |
|---|---|---|---|---|---|---|---|---|
| | Queue | Reader | Dest. | Priority | Queue | Reader | Dest. | Priority |
| 0 | 0 | 0 | Access | 0 | 16 | 16 | Backplane | 0 |
| 1 | 1 | 1 | Access | 1 | 17 | 17 | Backplane | 1 |
| 2 | 2 | 2 | Access | 2 | 18 | 18 | Processor | 0 |
| 3 | 3 | 3 | Access | 3 | 19 | 19 | Processor | 1 |
| 4 | 4 | 4 | Net-1 | 0 | | | | |
| 5 | 5 | 5 | Net-1 | 1 | | | | |
| 6 | 6 | 6 | Net-1 | 2 | | | | |
| 7 | 7 | 7 | Net-1 | 3 | | | | |
| 8 | | | | | 8 | 24 | Net-1 | 0 |
| 9 | | | | | 9 | 25 | Net-2 | 1 |
| 10 | | | | | 10 | 26 | Net-2 | 2 |
| 11 | | | | | 11 | 27 | Net-2 | 3 |
| 12 | 12 | 12 | N1(+N2) | 0 | 12 | 28 | N2(+N1) | 0 |
| 13 | 13 | 13 | N1(+N2) | 1 | 13 | 29 | N2(+N1) | 1 |
| 14 | 14 | 14 | N1(+N2) | 2 | 14 | 30 | N2(+N1) | 2 |
| 15 | 15 | 15 | N1(+N2) | 3 | 15 | 31 | N2(+N1) | 3 |

### SDRAM Utilisation

Assume a traffic load of 3.2 Gigabit/s. That is three Gigabit channels and two 100 Mbit/s channels. These can both read and write frames so the total bandwidth is 6.4 Gigabit/s. The peak raw bandwidth of the SDRAM is 8 Gigabit/s.

The above table shows SDRAM utilization when queuing frames of different sizes. It assumes that frame data is transferred in and out of SDRAM and that normal inter-frame gaps are observed. This means that on the line there is a nominal 12 bytes of inter-frame gap and 8 bytes of start of frame sequence.

In the SDRAM, there are 8 bytes of link label per segment, 8 bytes of command label in the first segment, and 0 to 7 bytes of padding in the last segment. The table below shows the shortest frame with 64 data bytes, and the 65 byte frame, which will have seven extra padding bytes. It then shows the longest frame that fits into one segment and a frame 1 byte longer. It also shows frames of 2 segments and 2 segments plus one byte, and of 37 segments and 37 segments plus one byte.

**Table 2 SDRAM Utilization**

| Frame size (bytes) | Size on the line | Size in SDRAM | SDRAM Utilization |
|---|---|---|---|
| 64 | 84 | 80 | 95.24% |
| 65 | 85 | 88 | 103.53% |
| 240 | 260 | 256 | 98.46% |
| 241 | 261 | 272 | 104.21% |
| 488 | 508 | 512 | 100.79% |
| 489 | 509 | 528 | 103.73% |
| 9168 | 9188 | 9472 | 103.09% |
| 9169 | 9199 | 9488 | 103.25% |

It is clear that the worst case utilization is with 241 byte frames and that 104.21 % means that the 6.4 Gigabit/s on the wire means 6.67 gigabit/s for the SDRAM. The SDRAM uses 2% for refresh leaving 7.82 Gigabit/s for data. 7.82 / 6.67 = 117.24%. Turnarounds take 4 cycles for a read-to-write and a write-to-read so if it does 100% of turnarounds with 32 cycle read and write accesses, then the utilization is 36/32 or 112.5% or less than the 117.24% available. In other words, there is space. No allowance was made for free buffer access as, at peak usage in both directions, the rate of freeing of buffers equals the rate of allocating them and so the window should not be moved up or down and no SDRAM accesses will be expected for the free buffer list.

### Functional Description

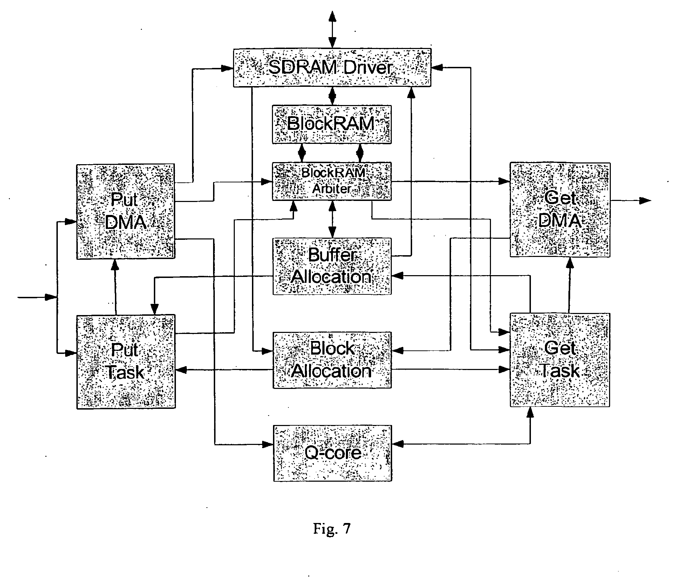

The Queuing system block diagram according to Fig. 7 shows the input pipeline sending data to Put DMA and going on into the BlockRAM from where it go out to the SDRAM to be read back later. It then goes out through the Get DMA. The diagram also shows the passing of blocks around and the ownership of buffers. The diagram is replicated to highlight basic modes of operation:

### Basic block ownership

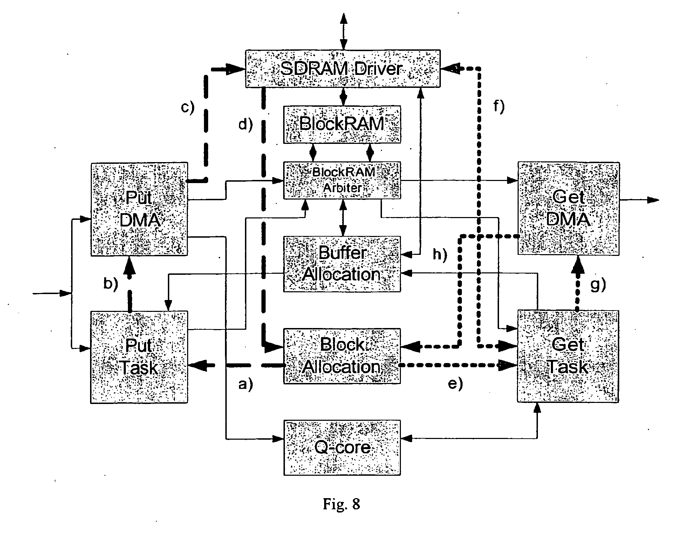

The diagram according to Fig. 8 shows how the Put Side gets a block to queue data into SDRAM and how the Get side gets another block to read the data out of SDRAM. The flow of blocks in the diagram according to Fig. 8 on the Put side is as follows:
a) The Put Task Module allocates itself a free block from the block allocation module in which to store data.
b) It instructs the Put DMA Module over the Put DMA command queue to copy data into the block. When the block is filled, it also instructs the Put DMA Module to copy the block to SDRAM and passes over ownership of the block to the Put DMA module.
c) Having completed the DMA operation and filled the block, the Put DMA queues a command to the SDRAM driver to write the data in the Block to SDRAM. The Put DMA command specified which buffer is to be used.
d) The SDRAM driver copies the data in the block to SDRAM and then frees the block, handing ownership of the block back to the free block allocator.

The Get side is similar, but it will in general use a different block to read out the data from SDRAM.
e) The Get Task gets a free block in order to read the next SDRAM buffer.
f) The Get Task sends a command to the SDRAM driver to read a data buffer from SDRAM into the block. The Get Task will be suspended (for this flow) until the SDRAM command completes.
g) When the SDRAM command completes the Get Task will command the Get DMA module to output data on the downstream pipe. When it reads out the final data from the block, it will pass ownership of the block to the Get DMA module.
h) The Get DMA reads out the data from the block and when it has finished with the final data transfer from this block it will free the block by passing ownership of the block back to the Free Block Allocation module.

### Shared block ownership

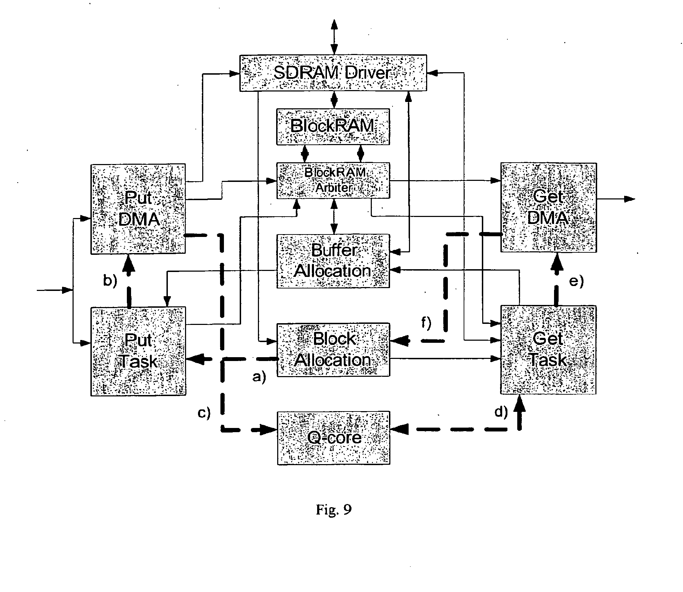

In the diagram according to Fig. 9, segments are read from a short queue without having to be copied to SDRAM. This is the equivalent of burst aggregation in the Mx products.

In the diagram according to Fig. 9:
a) The Put Task allocates itself a block from the Free Block Allocation module.
b) The Put Task sends commands to the Put DMA controller to copy data into the block.
c) When the Block is full, the Put DMA tells Q-Core that it is adding a main queue block to the queue and Q-core says that ownership of this block is shared with the Get Task. The Put DMA does not copy the data to SDRAM and does not free the block.
d) Previously, when Get had advanced to this block it had been told by Q-core that it would be sharing ownership of a block with the Put side. Q-Core would tell it the index of the Block used by the Put side.
e) The Get Task will have commanded the Get DMA to read out data up to the tail pointer out of the block without having to load the block from SDRAM.
f) When the Get DMA has read out the final data, it will free the block by passing ownership of the block back to the free block allocator.
   Even though all the above is for a unicast queue, it basically stands for an operation with multicast queues.

### Buffer Handling in Queues

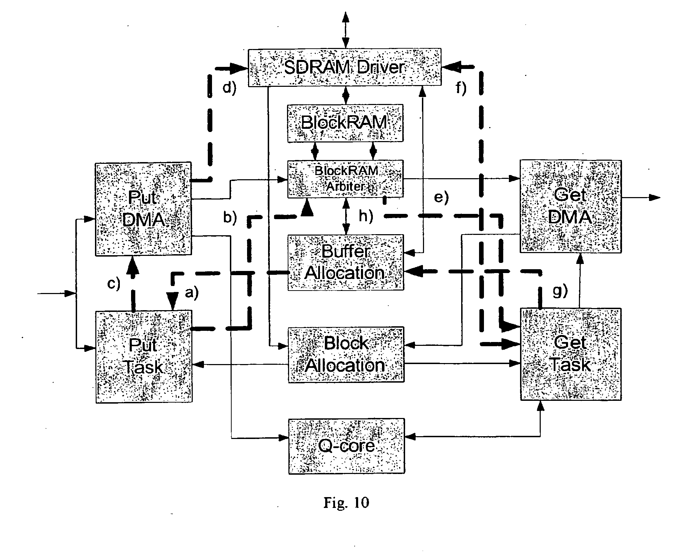

The block diagram according to Fig 10 also shows how the ownership of buffers is passed around the system.

The diagram according to Fig. 10 shows the management of buffers in a queue.
a) The Put Task allocates buffers as needed by the queues. Buffers are always allocated one buffer in advance so that when the link label is written into one buffer, the next buffer is always known.
b) The Put Task forms the buffers into a linked list with side chains using the link label. The Put Task writes the link label into blocks using the BlockRAM arbiter.
c) The Put Task tells the DMA controller which buffer corresponds to the current block.
d) The Put DMA then writes the completed block to the SDRAM buffer. The SDRAM buffer is now owned by the queue.
e) The Get Task will learn the buffer index by reading the preceding pipeline label.
f) The Get task will read the SDRAM buffer and copy its contents into a block in BlockRAM.
g) When the SDRAM access has completed, the buffer can be freed by passing ownership to the Buffer Allocation module.

## Claims

1. A method for storing frames or other packets of data in queues in a bulk storage device,
comprising the steps of:
splitting up at least a portion of the bulk storage device into a number of buffers each of one or more chunks and
queuing the frames or other packets of data which arrive from an input pipe as a series of segments, wherein a frame or other packet of data may be split into one or more segments,
**characterized in that**,
if a frame or other packet of data is split into multiple segments (1-6), each segment (1-6) except the last, respectively, will entirely fill a buffer,
wherein each segment (1-6) except the last segment of a frame has a link label attached to it, which serves to link segments (1-6) into frames within the bulk storage device and allows frames from multiple flows to be separately assembled in bulk storage prior to being assigned to a queue (Fig. 3).

2. The method according to claim 1 wherein one or more final segments of a frame are packed into one or more buffers.

3. The method according to claim 1 or 2 wherein each final segment of a frame has a link label attached to it, which serves to link in the reset of the frame and to link together the buffers in which the final buffers are packed in bulk storage to form queues.

4. The method according to one of the preceding claims wherein on the input pipe, the frames or other packets of data from a number of flows may be interleaved at the segment level.

5. The method according to one of the preceding claims wherein a queue (Fig. 3) is not dedicated to a particular input pipe, so that any flow of the input pipe can write to any queue.

6. The method according to one of the preceding claims wherein in case a multi-segment frame is received, all the segments (1-6) except the last are stored in a linked list.

7. The Method according to claim 6 wherein one linked list is required per flow.

8. The Method according to claim 6 or 7 wherein the linking is achieved using the link field in the link label that is attached to each segment (1-6) by the queuing mechanism.

9. The method according to one of the preceding claims wherein a local storage, particulary an internal BlockRAM, and the bulk storage device are shared by two directions, and the bulk storage device is bypassed when the queue is small.

10. A queuing system for storing frames or other packets of data in queues in a bulk storage device comprising:
a bulk storage device with at least a portion thereof is split up into a number of buffers each of one or more chunks and
hardware means, particularly FPGA or ASIC logic, for queuing the frames or other packets of data arriving from an input pipe as a series of segments, wherein a frame or other packet of data may be split into one ore more segments (1-6),
**characterized in that**
the queuing system is configured such that, if a frame or other packet of data is split into multiple segments (1-6), then each segment (1-6) except the last, respectively, will entirely fill a buffer,
and
the queuing system is configured such that each segment (1-6) except the last segment of a frame has a link label attached to it, which serves to link segments (1-6) into frames within the bulk storage device and allows frames from multiple flows to be separately assembled in bulk storage prior to being assigned to a queue (Fig. 3).

## Patentansprüche

1. Verfahren zum Speichern von Frames oder anderen Datenpaketen in Warteschlangen in einer Massenspeichervorrichtung, das folgende Schritte aufweist:
Aufteilen von mindestens einem Teil der Massenspeichervorrichtung in eine Anzahl von Puffern aus jeweils einem oder mehreren Chunks und
Bilden einer Warteschlange aus den Frames oder anderen Datenpaketen, die von einem Eingangskanal als eine Reihe von Segmenten ankommen, wobei ein Frame oder ein anderes Datenpaket in ein oder mehrere Segmente aufgeteilt sein kann,
**dadurch gekennzeichnet, dass,**
wenn ein Frame oder ein anderes Datenpaket in mehrere Segmente (1-6) aufgeteilt ist, jedes Segment (1-6) außer dem letzten jeweils einen Puffer komplett füllt,
wobei an jedem Segment (1-6) außer dem letzten Segment eines Frames ein Verknüpfungsetikett angebracht ist, das dazu dient, Segmente (1-6) innerhalb der Massenspeichervorrichtung zu Frames zu verknüpfen, und es ermöglicht, dass Frames aus mehreren Strömen separat in dem Massenspeicher zusammengesetzt werden, bevor sie einer Warteschlange zugeordnet werden (Fig. 3).

2. Verfahren nach Anspruch 1, bei dem ein oder mehrere Endsegmente eines Frames in einen oder mehrere Puffer gepackt werden.

3. Verfahren nach Anspruch 1 oder 2, bei dem an jedem Endsegment eines Frames ein Verknüpfungsetikett angebracht ist, welches dazu dient, das Rücksetzen des Frames mit zu verknüpfen und die Puffer, in denen die Endpuffer in einem Massenspeicher gepackt sind, miteinander zu verknüpfen, um Warteschlangen zu bilden.

4. Verfahren nach einem der vorhergehenden Ansprüche, bei dem an dem Eingangskanal die Frames oder andere Datenpakete aus einer Anzahl von Strömen auf der Segmentebene überlappend sein können.

5. Verfahren nach einem der vorhergehenden Ansprüche, bei dem eine Warteschlange (Fig. 3) keinem bestimmten Eingangskanal dediziert ist, so dass jeder Strom des Eingangskanals in jede Warteschlange schreiben kann.

6. Verfahren nach einem der vorhergehenden Ansprüche, bei dem in dem Fall, dass ein aus mehreren Segmenten bestehender Frame empfangen wird, alle Segmente (1-6) außer dem letzten in einer verknüpften Liste gespeichert werden.

7. Verfahren nach Anspruch 6, bei dem eine verknüpfte Liste pro Strom erforderlich ist.

8. Verfahren nach Anspruch 6 oder 7, bei dem die Verknüpfung durch den Mechanismus zur Bildung der Warteschlange unter Verwendung des Verknüpfungsfelds in dem Verknüpfungsetikett, das an jedem Segment (1-6) angebracht ist, erzielt wird.

9. Verfahren nach einem der vorhergehenden Ansprüche, bei dem ein lokaler Speicher, insbesondere ein internes Block-RAM, und die Massenspeichervorrichtung von zwei Richtungen geteilt werden und die Massenspeichervorrichtung umgangen wird, wenn die Warteschlange klein ist.

10. System zur Bildung einer Warteschlange zum Speichern von Frames oder anderen Datenpaketen in Warteschlangen in einer Massenspeichervorrichtung, mit:
einer Massenspeichervorrichtung, bei der zumindest ein Teil derselben in eine Anzahl von Puffern aus jeweils einem oder mehreren Chunks aufgeteilt ist, und
Hardware-Mitteln, insbesondere einer FPGA- oder ASIC-Logik, um aus den Frames oder anderen Datenpaketen, die von einem Eingangskanal als eine Reihe von Segmenten ankommen, eine Warteschlange zu bilden, wobei ein Frame oder ein anderes Datenpaket in ein oder mehrere Segmente aufgeteilt sein kann,
**dadurch gekennzeichnet, dass**
das System zur Bildung einer Warteschlange derart ausgebildet ist, dass, wenn ein Frame oder ein anderes Datenpaket in mehrere Segmente (1-6) aufgeteilt ist, jedes Segment (1-6) außer dem letzten jeweils einen Puffer komplett füllt,
und
dass das System zur Bildung einer Warteschlange derart ausgebildet ist, dass an jedem Segment (1-6) außer dem letzten Segment eines Frames ein Verknüpfungsetikett angebracht ist, das dazu dient, Segmente (1-6) innerhalb der Massenspeichervorrichtung zu Frames zu verknüpfen, und es ermöglicht, dass Frames aus mehreren Strömen separat in dem Massenspeicher zusammengesetzt werden, bevor sie einer Warteschlange zugeordnet werden (Fig. 3).

## Revendications

1. Procédé destiné à stocker des trames ou autres paquets de données dans des files d'attente dans un dispositif de stockage de masse, comprenant les étapes consistant à :
fractionner au moins une partie du dispositif de stockage de masse en un certain nombre de mémoires tampons, chacune d'elles présentant un ou plusieurs morceaux ; et
mettre en files d'attente les trames ou autres paquets de données qui arrivent en provenance d'un canal d'entrée sous la forme d'une série de segments, dans lequel une trame ou tout autre paquet de données peut être fractionné en un ou plusieurs segments ;
**caractérisé en ce que :**
si une trame ou tout autre paquet de données est fractionné en de multiples segments (1 - 6), chaque segment (1 - 6) à l'exception du dernier, respectivement, remplira entièrement une mémoire tampon ;
dans lequel chaque segment (1 - 6) à l'exception du dernier segment d'une trame, présente une étiquette de liaison qui lui est attachée et qui sert à lier des segments (1 - 6) en trames à l'intérieur du dispositif de stockage de masse et qui permet d'assembler de manière séparée des trames en provenance de multiples flux dans le stockage de masse avant de les affecter à une file d'attente (Fig. 3).

2. Procédé selon la revendication 1, dans lequel un ou plusieurs segments finaux d'une trame sont empaquetés dans une ou plusieurs mémoires tampons.

3. Procédé selon la revendication 1 ou la revendication 2, dans lequel chaque segment final d'une trame présente une étiquette de liaison qui lui est attachée et qui sert à lier dans la réinitialisation de la trame et à lier ensemble les mémoires tampons dans lesquelles les mémoires tampons finales sont empaquetées dans le stockage de masse de façon à former des files d'attente.

4. Procédé selon l'une quelconque des revendications précédentes, dans lequel sur le canal d'entrée, les trames ou autres paquets de données en provenance d'un certain nombre de flux peuvent être entrelacés au niveau du segment.

5. Procédé selon l'une quelconque des revendications précédentes, dans lequel une file d'attente (Fig. 3) n'est pas dédiée à un canal d'entrée particulier, de telle sorte que n'importe quel flux du canal d'entrée puisse écrire vers n'importe quelle file d'attente.

6. Procédé selon l'une quelconque des revendications précédentes, dans lequel, dans le cas de la réception d'une trame qui présente plusieurs segments, tous les segments (1 - 6) à l'exception du dernier, sont stockés dans une liste liée.

7. Procédé selon la revendication 6, dans lequel une liste liée est requise par flux.

8. Procédé selon la revendication 6 ou la revendication 7, dans lequel la liaison se fait en utilisant le champ de liaison dans l'étiquette de liaison qui est attachée à chaque segment (1 - 6) par le mécanisme de mise en file d'attente.

9. Procédé selon l'une quelconque des revendications précédentes, dans lequel un stockage local, en particulier une BlockRAM interne, et le dispositif de stockage de masse sont partagés par deux directions, et le dispositif de stockage de masse est ignoré lorsque la file d'attente est petite.

10. Système de mise en file d'attente destiné à stocker des trames ou autres paquets de données dans des files d'attente dans un dispositif de stockage de masse, comprenant :
un dispositif de stockage de masse dont une partie au moins est fractionnée en un certain nombre de mémoires tampons, chacune d'elles présentant un ou plusieurs morceaux ; et
des moyens matériels, en particulier une logique FPGA ou ASIC, destinés à mettre en files d'attente les trames ou autres paquets de données qui arrivent en provenance d'un canal d'entrée sous la forme d'une série de segments, dans lequel une trame ou tout autre paquet de données peut être fractionné en un ou plusieurs segments (1 - 6) ;
**caractérisé en ce que :**
le système de mise en file d'attente est configuré de telle sorte que, si une trame ou tout autre paquet de données est fractionné en de multiples segments (1 - 6), alors chaque segment (1 - 6) à l'exception du dernier, respectivement, remplira entièrement une mémoire tampon ;
et
le système de mise en file d'attente est configuré de telle sorte que chaque segment (1 - 6) à l'exception du dernier segment d'une trame, présente une étiquette de liaison qui lui est attachée et qui sert à lier des segments (1 - 6) en trames à l'intérieur du dispositif de stockage de masse et qui permet d'assembler de manière séparée des trames en provenance de multiples flux dans le stockage de masse avant de les affecter à une file d'attente (Fig. 3).
